# EUROPÄISCHE PATENTSCHRIFT

(11) **EP 3 206 908 B1**
(45) Veröffentlichungstag und Bekanntmachung des Hinweises auf die Patenterteilung: **19.02.2025**
(21) Anmeldenummer: 15791485.4
(22) Anmeldetag: 16.10.2015
(51) Int. Cl.: B60N 2/809, B60N 2/865

(54) **KOPFSTÜTZE FÜR EINEN FAHRZEUGSITZ**
HEADREST FOR A VEHICLE SEAT
APPUI-TÊTE POUR SIÈGE DE VÉHICULE

(30) Priorität: 16.10.2014 DE 102014015205
(43) Veröffentlichungstag der Anmeldung: 23.08.2017
(73) Patentinhaber: GRAMMER AG, 92289 Ursensollen (DE)
(72) Erfinder: DELLING, Gerhard, 92546 Schmidgaden (DE); BÖSL, Manuel, 92272 Freudenberg (DE); SCHLIERF, Manfred, 92224 Amberg (DE); KOTZ, Maximilian, 92286 Rieden (DE); WALLINGER, Thomas, 92439 Bodenwöhr (DE)
(74) Vertreter: Roche, von Westernhagen & Ehresmann
(86) Internationale Anmeldenummer: PCT/DE2015/000511
(87) Internationale Veröffentlichungsnummer: WO 2016/058581

(56) Entgegenhaltungen:
- EP-A2- 1 134 114
- WO-A1-2011/032702
- DE-A1- 102009 038 631
- DE-A1- 3 109 592
- DE-B3- 102012 025 191

## Beschreibung

Die Erfindung betrifft eine Kopfstütze. Eine solche Kopfstütze weist einen Kopfkasten auf, welcher mittels wenigstens einer Tragstange an der Rückenlehne eines Fahrzeugsitzes lagerbar ist. Ein Kopfanlageteil ist relativ zu dem Kopfkasten zwischen einer hinteren, vom Kopf eines Sitzinsassen wegbewegten Position und einer vorderen, dem Kopf angenäherten Position, bewegbar.

Eine solche Kopfstütze ist aus der DE 10 2009 038 631 A1 bekannt. Bei dieser Kopfstütze ist das Kopfanlageteil von zwei Zahnrädern, die um vertikale Achsen drehbar sind und einem Zahnrad, welches um eine horizontale Achse drehbar ist, geführt.

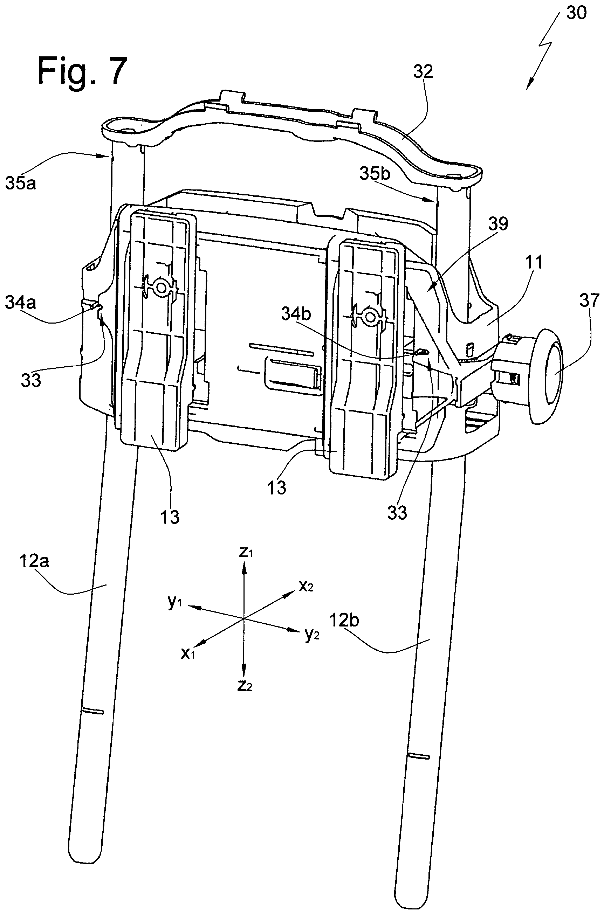

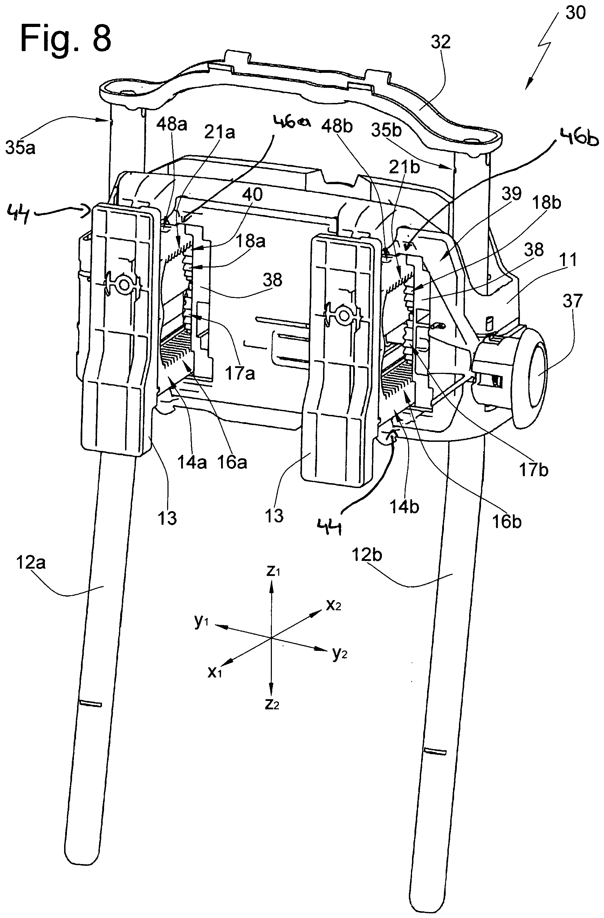

EP 1 134 114 A2 betrifft einer Kopfstütze mit einem Kopfanlageteil, welches bei dem Ausführungsbeispiel, das in den Fig. 7 und 8 dargestellt und in Absatz 17 beschrieben ist, geschwenkt und in horizontalter Richtung sowie in vertikaler Richtung bewegt wird. Das Kopfanlageteil ist an einem Halteelement 16 gelagert.

Die Schwenkvorrichtung 20 weist zwei Paare von konzentrisch zur Drehachse 21 angeordneten voneinander radial beabstandeten Zahnsegmenten 37, 38 auf, deren Zahnreihen einander zugekehrt sind, sowie zwei Paare von jeweils mit einem der Zahnsegmente 37, 38 kämmenden Zahnrädern 39, 40 auf. Die insgesamt vier Zahnsegmente 37 und 38 sind an dem Kopfanlageteil befestigt, während die insgesamt vier Zahnräder 39 und 40 drehbar an dem Halteelement gelagert sind. Dabei sitzen die beiden mit den Zahnsegmenten 37 kämmenden Zahnräder 39 und die beiden mit den Zahnsegmenten 38 kämmenden Zahnräder 40 jeweils auf einer gemeinsamen Welle 41 bzw. 42. Auf der Zahnradwelle 43 sitzt außerdem noch ein Antriebszahnrad 43 sowie ein Handrad 44. Das Antriebszahnrad 43 kämmt mit dem Zahnrad 43.

WO 2011/032702 A1 beschreibt eine Kopfstütze, die drei Führungselemente 5 aufweist, die dreieckförmig angeordnet und in Führungsmitteln 18 gelagert sind. Diese drei Führungselemente werden mittels der beiden Zahnräder 18 miteinander synchronisiert. diese Zahnräder 22 kämmen miteinander und das obere Zahnrad 22 ist drehfest mit einer Welle verbunden, auf der ebenfalls drehfest Zahnräder angeordnet sind, die mit Zahnstangen, die an den Führungselementen 5 vorgesehen sind, kämmen.

Es war Aufgabe der Erfindung eine andere vorteilhafte Kopfstütze mit einem einfachen Aufbau und einer soliden Führung zu schaffen.

Die Aufgabe wurde gelöst durch eine Kopfstütze mit den Merkmalen des Anspruchs 1.

Die erfindungsgemäße Kopfstütze umfasst einen Kopfkasten, welcher an wenigstens einer Tragstange, insbesondere an zwei Tragstangen, gehalten ist. Der Kopfkasten kann relativ zu der Tragstange unbeweglich oder beweglich gelagert sein. Im Falle der beweglichen Lagerung ist der Kopfkasten z.B. höhenverstellbar an der Tragstange gelagert. Die Tragstange ist an einem Fahrzeugsitz, insbesondere an der Rückenlehne eines Fahrzeugsitzes lagerbar. Dafür weist der Fahrzeugsitz Führungen zur Lagerung und Befestigung der Tragstangen auf. Die Tragstange kann z.B. in verschiedenen Relativpositionen zu den Führungen höhenverstellbar und in diesen Positionen arretierbar sein.

Ein Kopfanlageteil ist mittels einer primären Führungsvorrichtung relativ zu dem Kopfkasten in horizontaler Richtung zwischen einer von dem Kopf eines Sitzinsassen wegbewegten hinteren Position und einer dem Kopf angenäherten vorderen Position verstellbar. Dafür sind an dem Kopfkasten erste Führungsmittel ausgebildet, die mit zweiten Führungsmitteln des Kopfanlageteils zusammenwirken und die Verstellung zwischen der hinteren und der vorderen Position ermöglichen.

Dabei umfassen die einen Führungsmittel zwei horizontal voneinander beabstandete sich in Bewegungsrichtung des Kopfanlageteils erstreckende Zahnschienen, die ein erstes Zahnschienenpaar bilden. Die anderen Führungsmittel umfassen zwei horizontal voneinander beabstandete Zahnräder, die ein erstes Zahnradpaar bilden, wobei jedes Zahnrad mit einer Zahnschiene in Eingriff steht und bei der Bewegung des Kopfanlageteils zwischen der hinteren Position und der vorderen Position auf der Zahnschiene abrollt. Die Zahnräder sind z.B. mit einer Welle fest verbunden und somit untereinander drehverbunden oder mit anderen Worten gekoppelt. Gemäß einer Alternative sind die Zahnräder des ersten Zahnradpaares nicht mittels einer Welle gekoppelt, sondern einzeln an dem Kopfkasten drehbar gelagert.

Weiterhin umfassen die einen Führungsmittel zwei horizontal voneinander beabstandete sich in Bewegungsrichtung des Kopfanlageteils erstreckende Zahnschienen, die ein zweites Zahnschienenpaar bilden, welches sich parallel zu dem ersten Zahnschienenpaar erstreckt und diesem zugewandt ist. Mit jeder Zahnschiene des zweiten Zahnschienenpaares steht ein Zahnrad eines zweiten Zahnradpaares in Eingriff, welches zwei horizontal voneinander beabstandete Zahnräder umfasst. Die Zahnräder des zweiten Zahnradpaares sind z.B. mit einer Welle fest verbunden und somit miteinander drehverbunden. Gemäß einer Alternative sind die Zahnräder des zweiten Zahnradpaares nicht mittels einer Welle gekoppelt, sondern einzeln an dem Kopfkasten drehbar gelagert.

Jeweils ein Zahnrad des ersten Zahnradpaares steht weiterhin mit einem Zahnrad des zweiten Zahnradpaares in Eingriff. Dabei ist es möglich, dass lediglich eines der Zahnradpaare mit einer Welle gekoppelt ist und jedes Zahnrad dieses gekoppelten Zahnradpaares treibt ein Zahnrad des anderen Zahnradpaares an. Auf diese Weise ist eine Führung des Kopfanlageteils in zwei Raumrichtungen gewährleistet und ein ungewolltes Schwenken des Kopfanlageteils um jede der drei Raumachsen wird verhindert.

Die Kopfstütze ist z.B. mit einer Arretiervorrichtung versehen, welche dem Kopfkasten zugeordnete erste Arretiermittel und dem Kopfanlageteil zugeordnete zweite Arretiermittel umfasst. Die Arretiervorrichtung ist zwischen einer Arretierposition, in welcher die ersten Arretiermittel und die zweiten Arretiermittel in Eingriff stehen und einer Löseposition, in welcher die ersten Arretiermittel und die zweiten Arretiermittel außer Eingriff stehen, bewegbar. In der Arretierposition ist eine Bewegung des Kopfanlageteils in wenigstens eine Richtung nicht möglich. D.h. das Kopfanlageteil kann in eine Richtung bewegbar sein und in eine andere Richtung nicht bewegbar sein oder alternativ in beide Richtungen nicht bewegbar sein. In der Löseposition ist eine Bewegung des Kopfanlageteils in beide Richtungen möglich.

Der Kopfkasten ist z.B. mittels einer sekundären Führungsvorrichtung bewegbar an der Tragstange gelagert und mittels einer Verriegelungsvorrichtung in wenigstens einer Position verriegelbar. Der Kopfkasten kann z.B. Gleitlager aufweisen, mittels denen er an den Tragstangen gleitgelagert ist. Auf diese Weise ist der Kopfkasten z.B. in vertikaler Richtung verstellbar.

Die Verriegelungsvorrichtung umfasst z.B. wenigstens einen Rigel, welcher dem Kopfkasten zugeordnet ist, wobei der Riegel zwischen einer Riegelposition und einer Freigabeposition bewegbar ist. In der Riegelposition steht der Riegel in Eingriff mit einer Kerbe einer Anordnung von Kerben der Tragstange, wobei die Anordnung wenigstens eine Kerbe umfasst. In der Freigabeposition ist der Riegel außer Eingriff mit der Anordnung. In der Riegelposition ist eine Bewegung des Kopfkastens in wenigstens eine Richtung nicht möglich. D.h. die Bewegung des Kopfkastens ist z.B. in eine Richtung möglich, in eine andere Richtung hingegen nicht möglich oder gemäß einer Alternative, in beide Bewegungsrichtungen nicht möglich.

Der Riegel kann z.B. von einer Rückstellkraft in die Riegelposition belastet sein. Die Rückstellkraft kann daraus resultieren, dass der Riegel elastisch verformbar ist und sich in die Ausgangsform zurückstellt. Alternativ kann die Rückstellkraft z.B. von einem gesonderten Federelement aufgebracht werden.

Das Kopfanlageteil ist z.B. von einer Feder in die hintere Position belastet. Bei der Feder kann es sich z.B. um eine Schraubenfeder handeln, wobei ein Federende mit der Welle eines Zahnradpaares verbunden ist und ein anderes Federende mit dem Kopfkasten verbunden ist.

An dem Kopfkasten ist z.B. ein Verstellteil bewegbar gelagert. Das Verstellteil kann z.B. Teil der Verriegelungsvorrichtung und / oder der Arretiervorrichtung sein. Das Verstellteil ist zwischen einer ersten Position und einer zweiten Position bewegbar. Es kann translatorisch und / oder rotatorisch bewegbar sein. Das Verstellteil kann z.B. von einem Schieber gebildet sein. Der Schieber ist z.B. als Platte ausgebildet. Die Platte ist z.B. parallel zu einer von den Tragstangenenden aufgespannten Ebene bewegbar.

Z.B. sind die ersten Arretiermittel dem Verstellteil zugeordnet. Das Verstellteil weist z.B. wenigstens einen Arretierbereich auf, der lösbar in Eingriff mit den zweiten Arretiermitteln bewegbar ist. Bei den zweiten Arretiermitteln handelt es sich z.B. um eine Verzahnung.

Das Verstellteil ist z.B. Teil der Verriegelungsvorrichtung. Es umfasst z.B. Betätigungsmittel, die den Riegel zwischen der Riegelposition und der Freigabeposition bewegen.

Weitere Vorteile der Kopfstütze ergeben sich anhand der Beschreibung von in den Figuren dargestellten Ausführungsbeispielen. Es zeigen:
Fig. 1 eine perspektivische Darstellung einer ersten Ausführungsform der erfindungsgemäßen Kopfstütze, wobei das Kopfanlageteil nur teilweise dargestellt ist und sich in einer hinteren Position befindet,
Fig. 2 in Anlehnung an Fig. 1 die Kopfstütze, wobei das Kopfanlageteil in der vorderen Position angeordnet ist,
Fig. 2a eine Frontansicht der Kopfstütze, wobei das Kopfanlageteil in der hinteren Position angeordnet ist.
Fig. 3 eine Schnittdarstellung gemäß Schnittlinie III - III in Fig. 2a.
Fig. 4 eine Schnittdarstellung in Anlehnung an Fig. 3, wobei sich das Kopfanlageteil in der vorderen Position befindet,
Fig. 5 in Anlehnung an die Schnittdarstellung der Fig. 3 eine andere Ausführungsform, wobei lediglich ein durch eine Welle verbundenes Zahnradpaar zur Führung vorgesehen ist und wobei sich das Kopfanlageteil in der hinteren Position befindet,
Fig. 6 in Anlehnung an Fig. 5 die zweite Ausführungsform, wobei sich das Kopfanlageteil in der vorderen Position befindet,
Fig. 7 eine perspektivische Darstellung einer dritten Ausführungsform der Kopfstütze, wobei das Kopfanlageteil nur teilweise dargestellt und ein Polster nicht dargestellt ist und sich das Kopfanlageteil in der hinteren Position befindet,
Fig. 8 in Anlehnung an Fig. 7 die Kopfstütze, wobei sich das Kopfanlageteil in der vorderen Position befindet,
Fig. 9 eine Frontansicht der Kopfstütze gemäß Fig. 7,
Fig. 10 eine rückwärtige Ansicht der Kopfstütze gemäß Fig. 7,
Fig. 11 eine Seitenansicht gemäß Ansichtspfeil XI in Fig. 9,
Fig. 12 in Anlehnung an Fig. 11 eine Seitenansicht, wobei sich das Kopfanlageteil in der vorderen Position befindet,
Fig. 13 eine Schnittdarstellung gemäß Schnittlinie XIII - XIII in Fig. 9,
Fig. 14 in Anlehnung an Fig. 13 eine Schnittdarstellung, wobei sich das Kopfanlageteil in der vorderen Position befindet,
Fig. 15 eine Schnittdarstellung gemäß Schnittlinie XV - XV in Fig. 11, wobei sich ein Schieber in einer ersten Position befindet,
Fig. 16 in Anlehnung an Fig. 15 eine Schnittdarstellung, wobei sich der Schieber in einer zweiten Position befindet,
Fig. 17 eine Schnittdarstellung gemäß Schnittlinie XVII - XVII in Fig. 10,
Fig. 18 eine perspektivische Darstellung eines vierten Ausführungsbeispiels der erfindungsgemäßen Kopfstütze, wobei ein Kopfanlageteil nur teilweise und das Kopfpolster nicht dargestellt sind und wobei das Kopfanlageteil in der hinteren Position angeordnet ist,
Fig. 19 in Anlehnung an Fig. 18 die Kopfstütze, wobei sich das Kopfanlageteil in der vorderen Position befindet,
Fig. 20 eine Frontansicht der Kopfstütze, wobei sich das Kopfanlageteil in der hinteren Position befindet,
Fig. 21 eine rückwärtige Ansicht der Kopfstütze gemäß Fig. 20,
Fig. 22 eine Seitenansicht der Kopfstütze gemäß Ansichtspfeil XXII in Fig. 20,
Fig. 23 in Anlehnung an Fig. 22 eine Seitenansicht, wobei sich das Kopfanlageteil in der vorderen Position befindet,
Fig. 24 eine Schnittdarstellung gemäß Schnittlinie XXIV - XXIV in Fig. 20,
Fig. 25 in Anlehnung an Fig. 24 die Schnittdarstellung, wobei sich das Kopfanlageteil in der vorderen Position befindet,
Fig. 26 eine Schnittdarstellung gemäß Schnittlinie XXVI - XXVI in Fig. 20,
Fig. 27 in Anlehnung an Fig. 26 die Schnittdarstellung, wobei sich das Kopfanlageteil in der vorderen Position befindet.

Eine Kopfstütze insgesamt ist in den Fig. mit dem Bezugszeichen 10 bezeichnet. Gleiche Bezugszeichen in den Fig. bezeichnen entsprechende Teile.

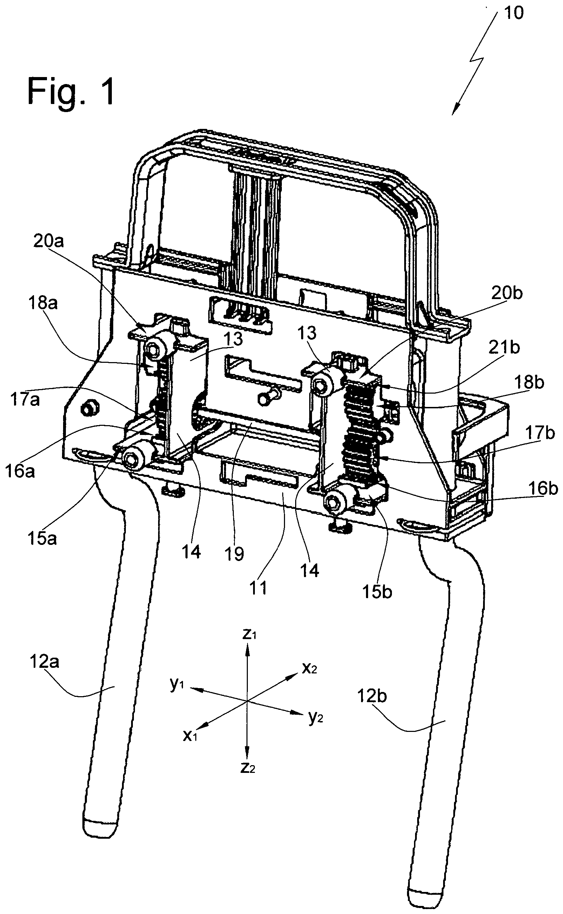

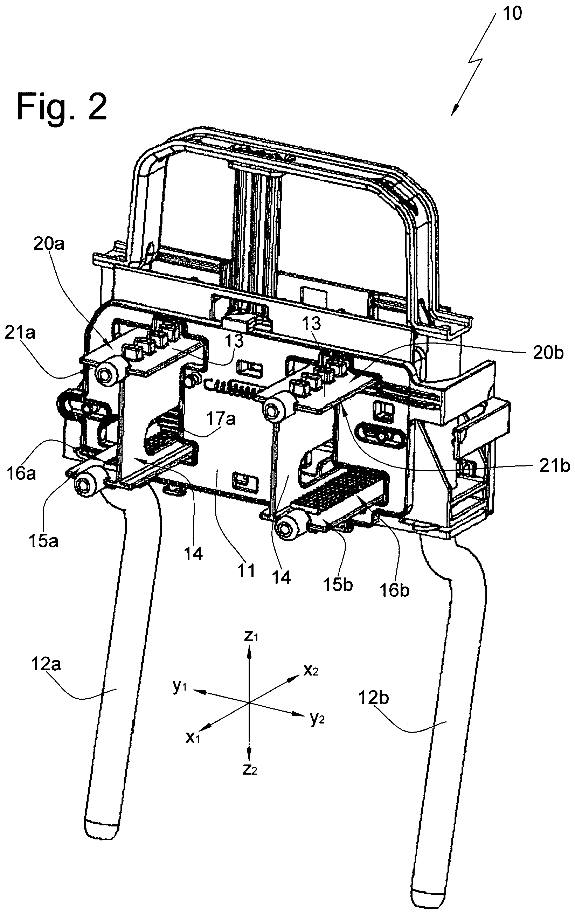

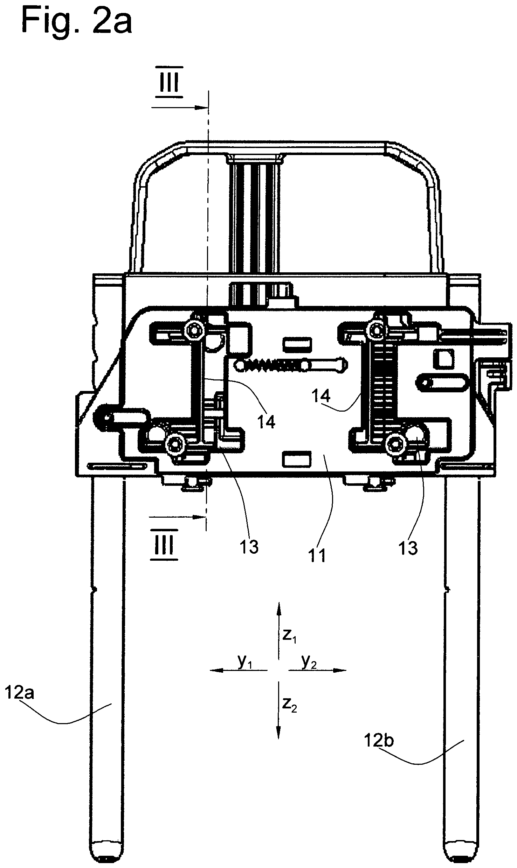

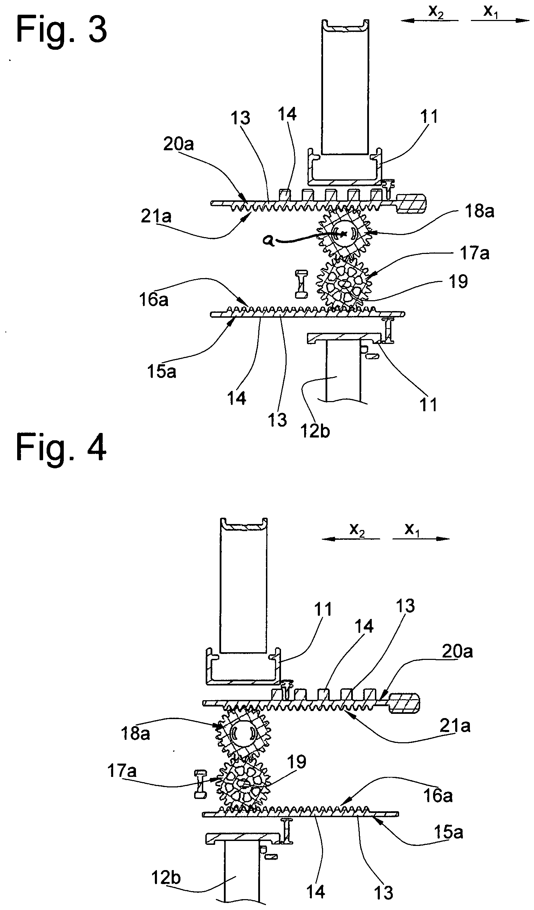

Die Kopfstütze 10 umfasst einen Kopfkasten 11 und Tragstangenenden 12a und 12b, mit denen die Kopfstütze 10 an der Rückenlehne eines nicht dargestellten Fahrzeugsitzes befestigt werden kann. Ein Kopfanlageteil 13 ist lediglich teilweise dargestellt, wobei eine Kopfanlageplatte in den Fig. nicht gezeigt ist. Das Kopfanlageteil 13 ist zwischen einer in Fig. 1 und 3 dargestellten hinteren Position und einer in Fig. 2 und 4 dargestellten vorderen Position bewegbar.

Ein hinterer Fortsatz 14 des Kopfanlageteils 13 umfasst gemäß dem ersten Ausführungsbeispiel untere etwa horizontale Platten 15a und 15b an denen jeweils eine Zahnschiene 16a und 16b ausgebildet ist. Die Zähne der Zahnschienen 16a und 16b weisen in Richtung z1. Die Zahnstrukturen der Zahnschienen 16a und 16b erstrecken sich in Richtung x1, x2, d.h. in Bewegungsrichtung des Kopfanlageteils. An dem Kopfkasten 11 sind mittels einer Welle 19 Zahnräder 17a und 17b gelagert. Die Zahnräder 17a und 17b sind mittels der Welle 19 bewegungsverbunden. Die Welle 19 ist etwa parallel zu einer y-Achse angeordnet. Das Zahnrad 17a steht mit der Zahnschiene 16a und das Zahnrad 17b mit der Zahnschiene 16b in Eingriff und rollt bei der Bewegung des Kopfanlageteils 13 zwischen der hinteren und der vorderen Position auf dieser ab.

In Richtung z1 befindet sich über dem Zahnrad 17a ein Zahnrad 18a und über dem Zahnrad 17b ein Zahnrad 18b. Die Zahnräder 17a und 18a und die Zahnräder 17b und 18b stehen in Eingriff miteinander. Die Zahnräder 18a und 18b sind an dem Kopfkasten 11 gelagert und sind nicht miteinander bewegungsverbunden. Eine geometrische Drehachse a der Zahnräder 18a und 18b ist parallel zu der y-Achse angeordnet.

Der Fortsatz 14 des Kopfanlageteils 13 umfasst ferner obere etwa horizontale Platten 20a und 20b an denen eine Zahnschiene 21a und 21b ausgebildet ist. Die Zähne der Zahnschienen 21a und 21b weisen in Richtung z2. Die Zahnstruktur der Zahnschienen 21a und 21b erstrecken sich in Richtung x1, x2, d.h. in Bewegungsrichtung des Kopfanlageteils. Das Zahnrad 18a steht mit der Zahnschiene 21a und das Zahnrad 18b mit der Zahnschiene 21b in Eingriff. Die Zahnräder 18a und 18b rollen bei der Bewegung des Kopfanlageteils 13 zwischen der hinteren und der vorderen Position auf den Zahnschienen 21a bzw. 21b ab.

Auf diese Weise kann sich das Kopfanlageteil 13 in die Richtungen x1 und x2 bewegen, ein Verdrehen des Kopfanlageteils um die x-, y- und z-Achse wird aber verhindert.

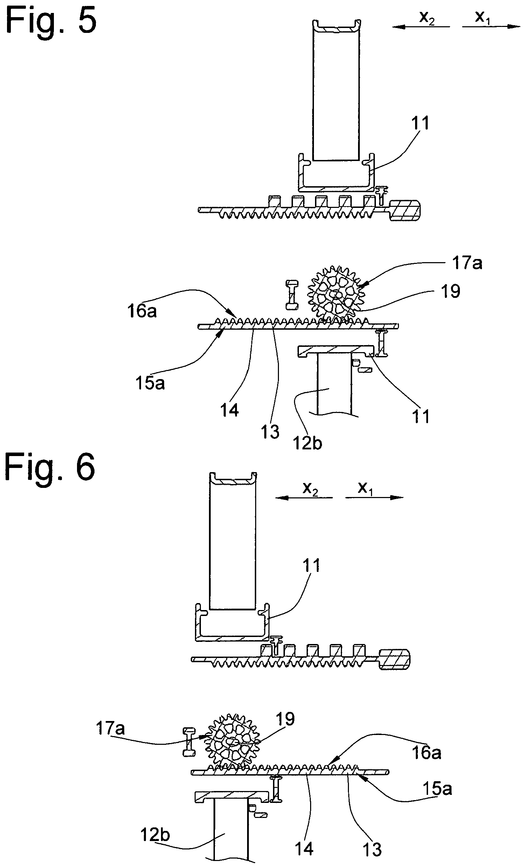

Ein zweites Ausführungsbeispiel ist in den Fig. 5 und 6 dargestellt. Es unterscheidet sich von dem ersten Ausführungsbeispiel nur dadurch, dass die Zahnräder 18a und 18b nicht vorhanden sind.

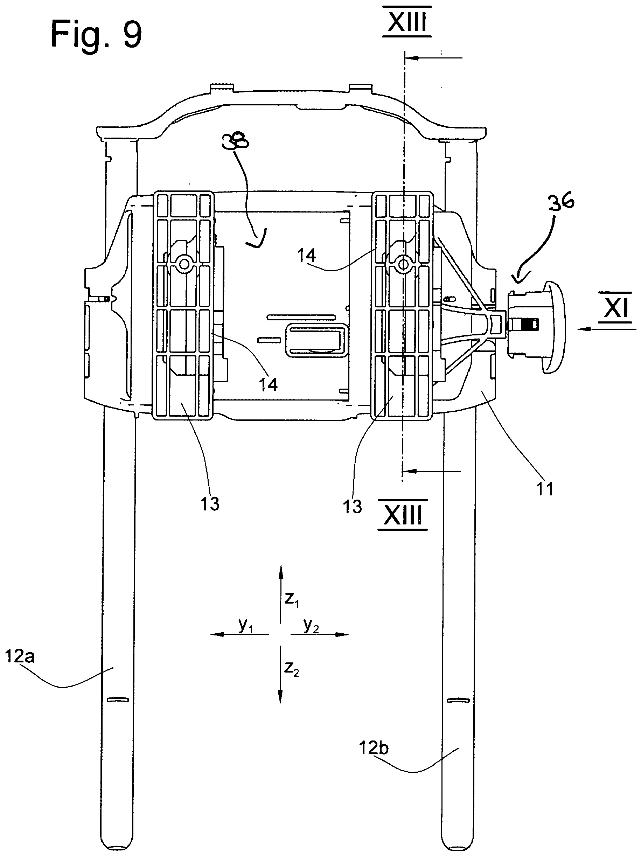

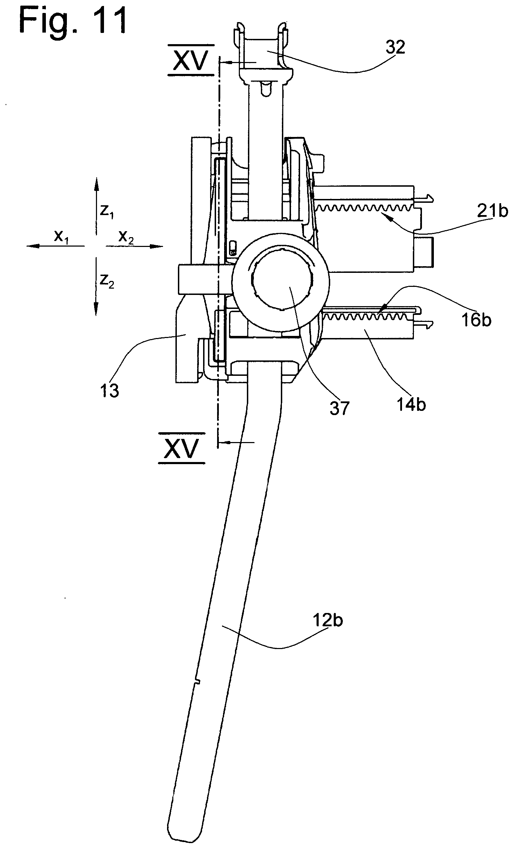

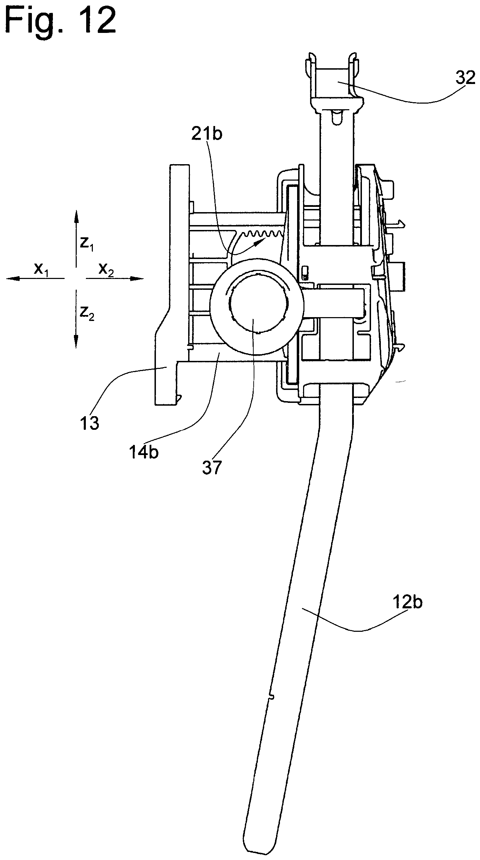

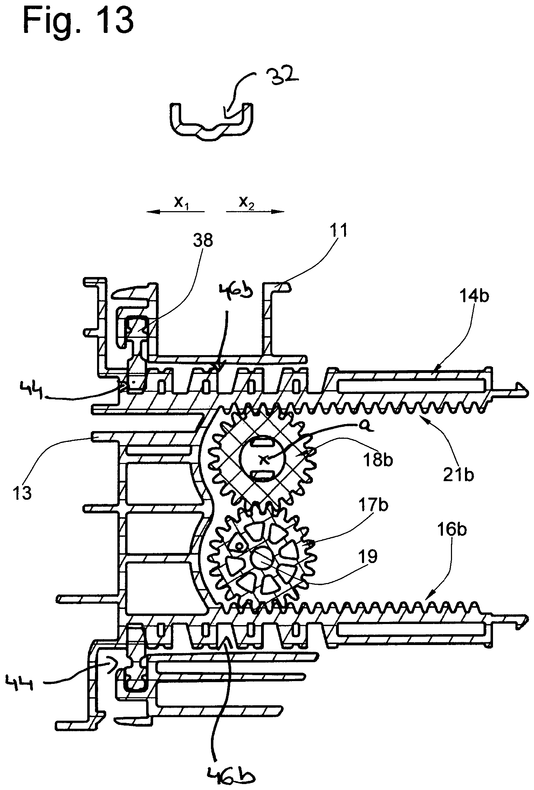

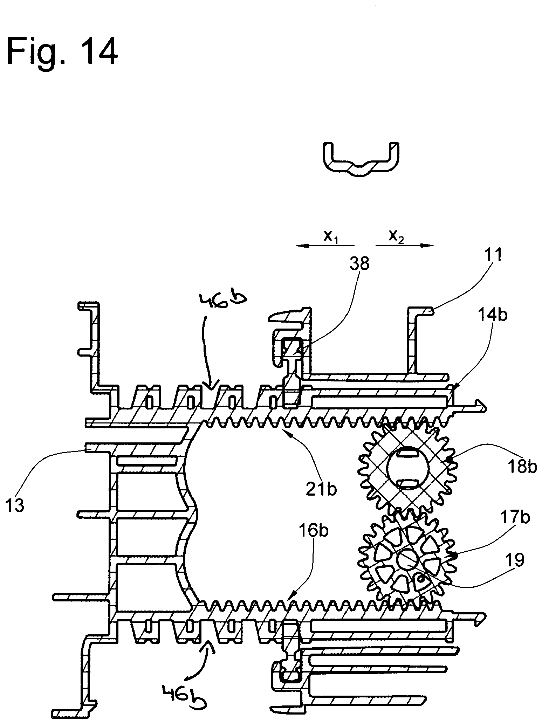

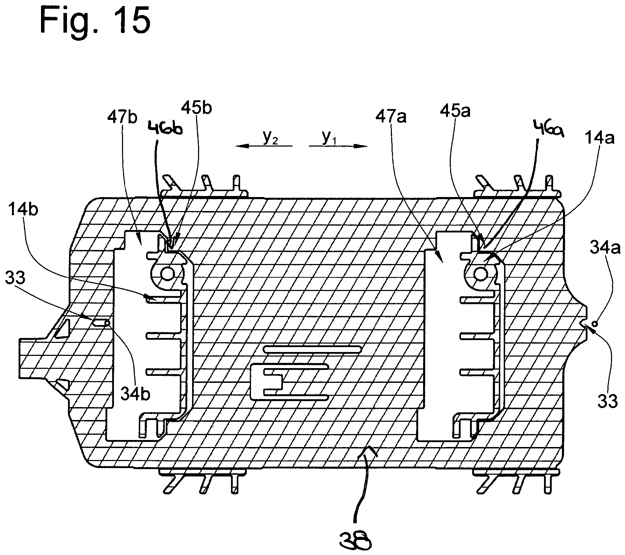

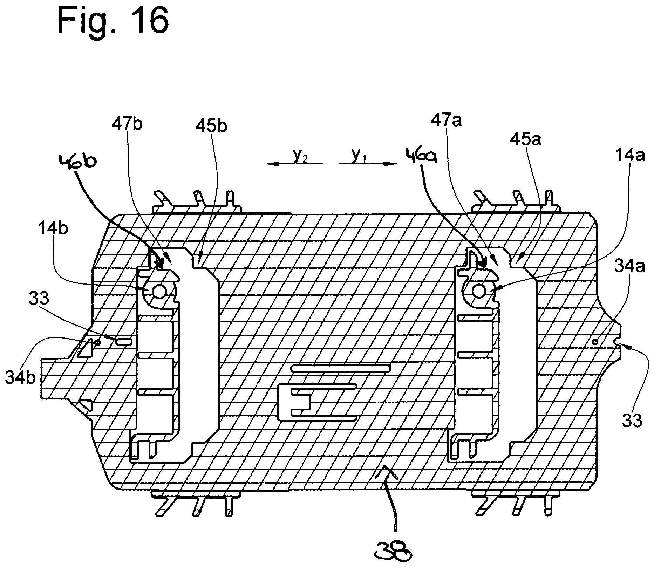

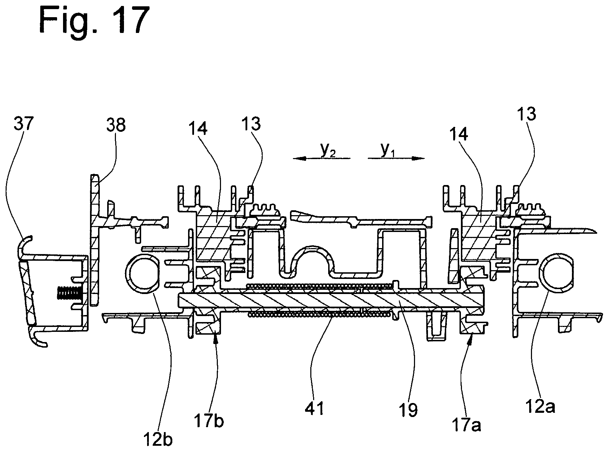

Ein drittes Ausführungsbeispiel einer Kopfstütze 30 ist in den Fig. 7 bis 18 dargestellt. Die Kopfstütze 30 umfasst einen Tragstangenbügel 31, welcher zwei Tragstangenenden 12a und 12b sowie eine die Tragstangenenden 12a und 12b verbindende Traverse 32 aufweist. An den Tragstangenenden 12a und 12b ist ein Kopfkasten 11 in die Richtungen z1 und z2 verstellbar geführt. Die freien Tragstangenenden 12a und 12b sind in korrespondierenden nicht dargestellten Führungen eines Fahrzeugsitzes lagerbar.

Mittels einer Verriegelungsvorrichtung 33 kann der Kopfkasten 11 in unterschiedlichen Höhenpositionen verriegelt werden. Die Verriegelungsvorrichtung 33 umfasst einen am Kopfkasten 11 gehaltenen Riegel 34a, der mit einer Anordnung von Kerben 35a zusammenwirkt sowie einen am Kopfkasten 11 gehaltenen Riegel 34b, der mit einer Anordnung von Kerben 35b zusammenwirkt.

In der Riegelposition greift der Riegel 34a in eine der Kerben der Anordnung 35a und der Riegel 34b greift in eine der Kerben der Anordnung 35b. Auf diese Weise wird eine Bewegung des Kopfkastens 11 in Richtung z2 verhindert. Aufgrund der Form der Kerben der Anordnungen 35a und 35b ist eine Bewegung des Kopfkastens 11 in Richtung z1 möglich. In der Freigabeposition sind die Riegel 34a und 34b außer Eingriff mit den Anordnungen 35a und 35b, d.h. die Riegel 34a und 34b greifen in keine der Kerben ein. Gemäß einer alternativen Ausführung könnten die Kerben auch so gestaltet sein, dass in der Riegelposition eine Bewegung in Richtung z1 und z2 verhindert wird.

Mit einer Betätigungsvorrichtung 36 kann die Verriegelungsvorrichtung 33 von der Riegelposition in die Freigabeposition bewegt werden. Die Verriegelungsvorrichtung 33 ist von einer Rückstellkraft in die Riegelposition belastet. Die Betätigungsvorrichtung 36 umfasst eine Handhabe 37 die mit einem Schieber 38 bewegungsverbunden ist. Wenn die Handhabe 37 in Richtung y1 bewegt wird, verlagert sie den Schieber 38 ebenfalls in Richtung y1. Der Schieber 38 drückt bei seiner Bewegung in Richtung y1 die Riegel 34a und 34b außer Eingriff mit den Anordnungen 35a und 35b und verstellt damit die Verriegelungsvorrichtung 33 in die Freigabeposition.

Der Schieber 38 ist von einer Platte gebildet, die etwa parallel zu einer von den Tragstangenenden 12a und 12b aufgespannten Ebene angeordnet ist und mittels einer Führung 39 an dem Kopfkasten 11 in die Richtungen y1 und y2 verlagerbar geführt ist. Von einem nicht dargestellten Rückstellelement ist der Schieber 38 in Richtung y2 belastet.

Das Kopfanlageteil 13 ist mit zwei Fortsätzen 14a und 14b versehen, die sich jeweils von dem Kopfanlageteil 13 in eine Richtung x2 erstrecken. Die Fortsätze 14a und 14b stellen Führungsmittel bereit, die einer Lagervorrichtung 40 zur Lagerung und Führung des Kopfanlageteils 13 an dem Kopfkasten 11 zugeordnet sind. Entsprechend dem ersten Ausführungsbeispiel sind an dem Fortsatz 14a Zahnschienen 16a und 21a und an dem Fortsatz 14b Zahnschienen 16b und 21b ausgebildet.

Die Zahnschienen 16 und 16b wirken in gleicher Weise, wie bei dem ersten Ausführungsbeispiel, mit durch eine Welle 19 verbundenen Zahnrädern 17a und 17b zusammen. Auch wirken die Zahnschienen 21a und 21b in gleicher Weise, wie bei dem ersten Ausführungsbeispiel, mit Zahnrädern 18a und 18b zusammen, die drehbar an dem Kopfkasten 11 gelagert sind. Außerdem stehen die Zahnräder 17a und 18a sowie die Zahnräder 17b und 18b in Eingriff miteinander. Die Längsachse der Welle 19 sowie eine geometrische Drehachse der Zahnräder 18a und 18b sind parallel zu der y-Achse angeordnet.

Auf diese Weise ist das Kopfanlageteil 13 in Richtung x1 und x2 bewegbar an dem Kopfkasten 11 geführt und lässt sich weder um eine parallel zu den Richtungen z1 und z2 ausgebildeten z-Achse noch um eine parallel zu den Richtungen y1 und y2 ausgebildeten y-Achse noch um eine parallel zu den Richtung x1 und x2 ausgebildete x-Achse drehen.

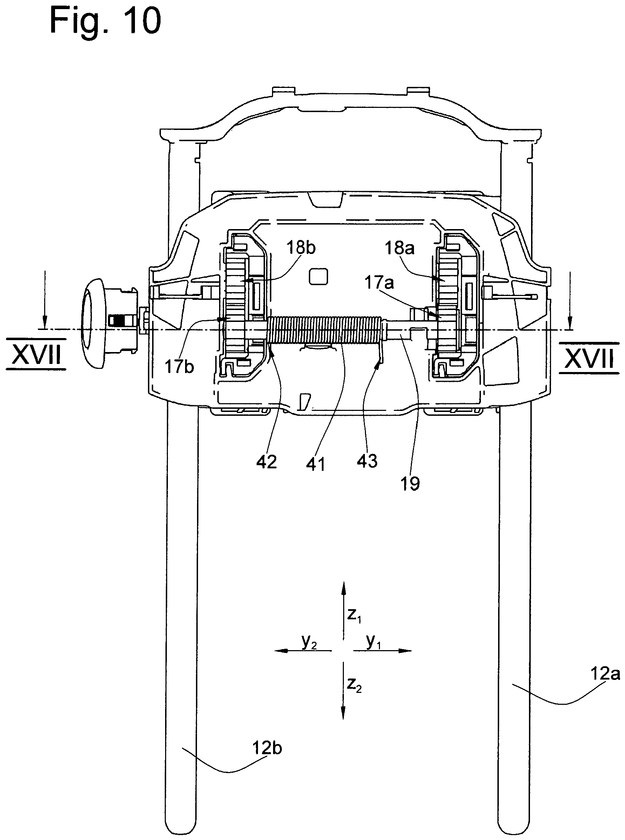

Die hintere, maximal zurückgezogene Position des Kopfanlageteils 13 ist in den Fig. 7, 9, 11 und 13 dargestellt, während die vordere, maximal vorgeschobene Position in den Fig. 8, 12 und 14 dargestellt ist. In der rückwärtigen Ansicht der Kopfstütze 30 gemäß Fig. 10 ist erkennbar, dass auf der Welle 19 eine Schraubenfeder 41 angeordnet ist, wobei ein erstes Federende 42 an der Welle 19 befestigt ist und ein zweites Federende 43 an dem Kopfkasten 11 befestigt ist. Die Welle 19 wird von der Feder 41 in Drehrichtung u1 und somit wird das Kopfanlageteil 13 in Richtung x2 belastet. Eine Bewegung der Welle 19 in Drehrichtung u2 spannt die Feder 41.

Eine Arretiervorrichtung 44 umfasst erste dem Kopfkasten 11 zugeordnete Arretiermittel sowie zweite, dem Kopfanlageteil 13 zugeordnete Arretiermittel. Die ersten Arretiermittel sind von Riegelbereichen 45a und 45b des Schiebers 38 gebildet. Der Schieber umfasst zwei Öffnungen 47a und 47b, wobei die Öffnung 47a von dem Fortsatz 14a und die Öffnung 47b von dem Fortsatz 14b durchsetzt ist. An der Laibung der Öffnung 47a ist eine Arretierbereich 45a und an der Laibung der Öffnung 47b ein Arretierbereich 45b angeordnet. An dem Fortsatz 14a ist eine Verzahnung 48a und an dem Fortsatz 14b ist eine Verzahnung 48b ausgebildet.

Wenn die Riegelbereiche 45a und 45b in der Arretierposition mit den Verzahnungen 48a und 48b in Eingriff stehen ist eine Bewegung des Kopfanlageteils in die Richtungen x1 und x2 (oder nur in Richtung x2?) nicht möglich. Sobald die Handhabe 37 in Richtung y1 betätigt wird bewegt sich der Schieber 38 in Richtung y1. Dabei werden die Riegelbereiche 45a und 45b außer Eingriff mit den Verzahnungen 48a und 48b bewegt. Die Arretiervorrichtung befindet sich dann in der Löseposition und das Kopfanlageteil kann manuell in die Richtungen x1 oder x2 bewegt werden.

Wenn die Handhabe 37 nicht mehr betätigt wird, verlagert die nicht dargestellte Feder den Schieber 38 in Richtung y2, wobei die Arretierbereiche 45a und 45b gegen die Fortsätze 14a und 14b in Eingriff mit den Verzahnungen 48a und 48b belastet werden. Dabei kann das Kopfanlageteil 13 eine Position aufweisen, in welcher die Arretierbereiche 45a und 45b nicht unmittelbar in eine der Aussparungen der Verzahnungen 48a und 48b eingreifen können. Aufgrund der Rückstellbelastung des Kopfanlageteils 13 mittels der Feder 41 in Richtung x2 bewegt sich das Kopfanlageteil 13 soweit in Richtung x2, bis die Arretierbereiche 45a und 45b in eine der Aussparungen 46a und 46b der Verzahnungen 48a und 48b eingreifen.

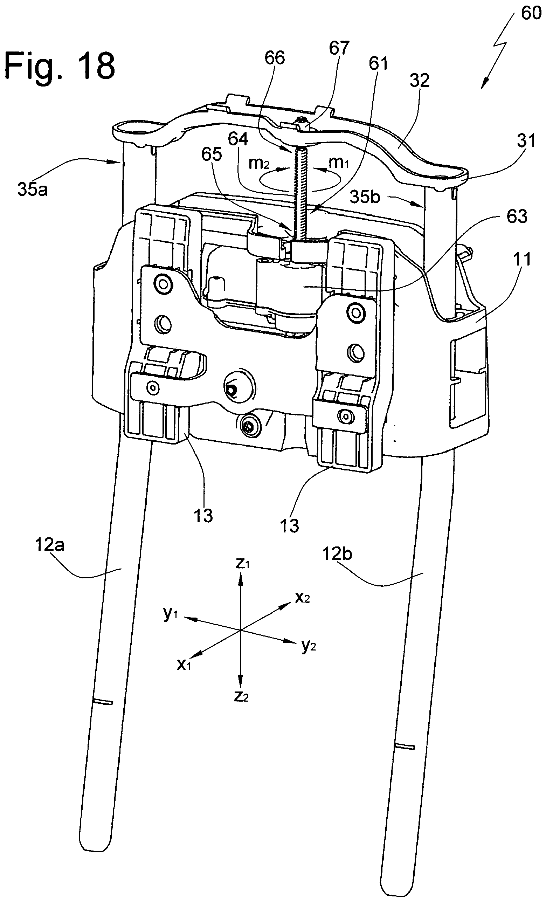

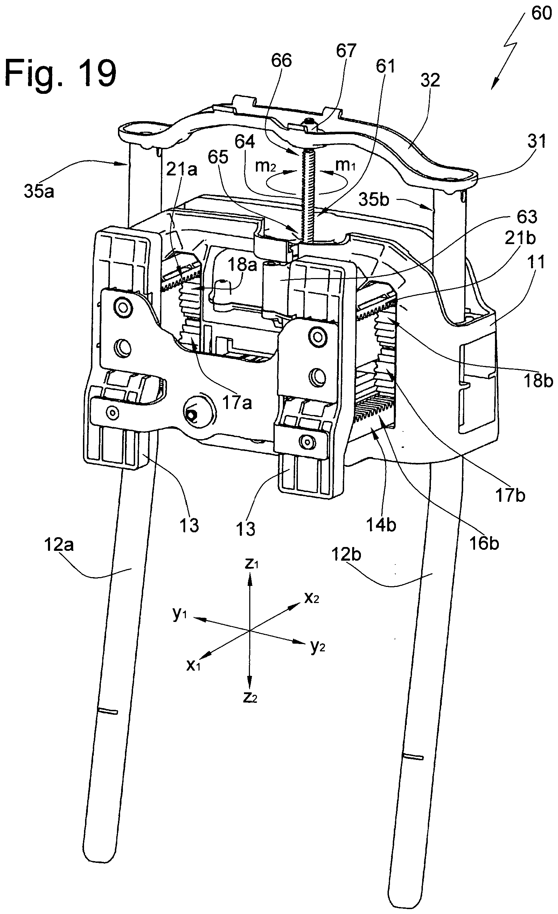

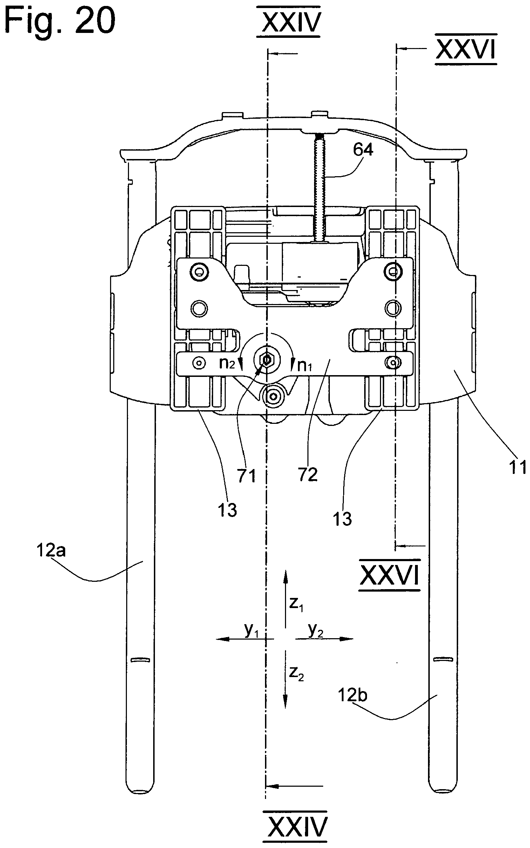

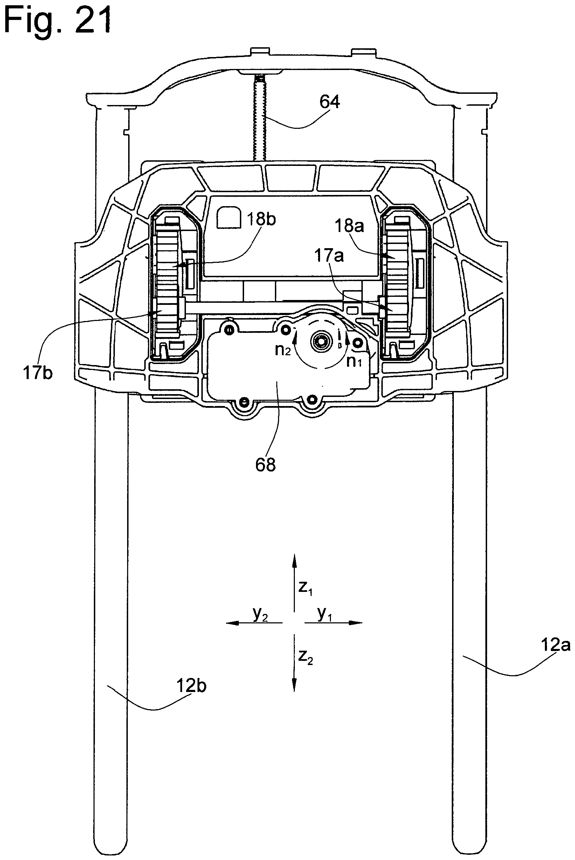

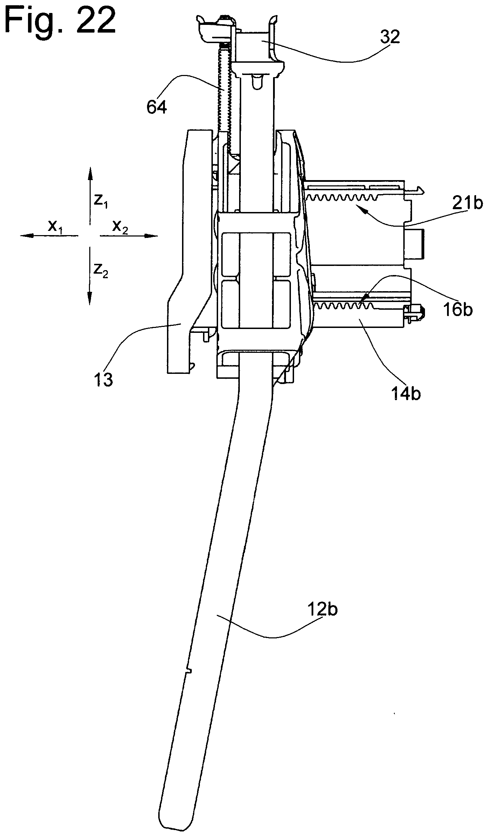

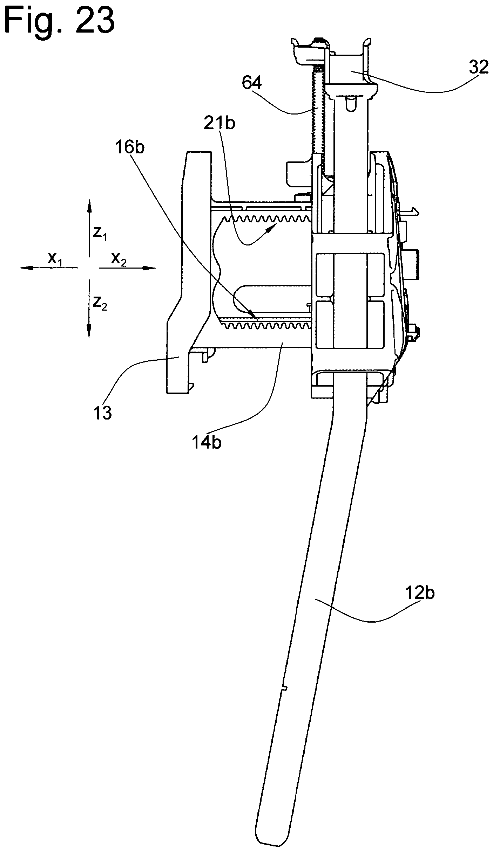

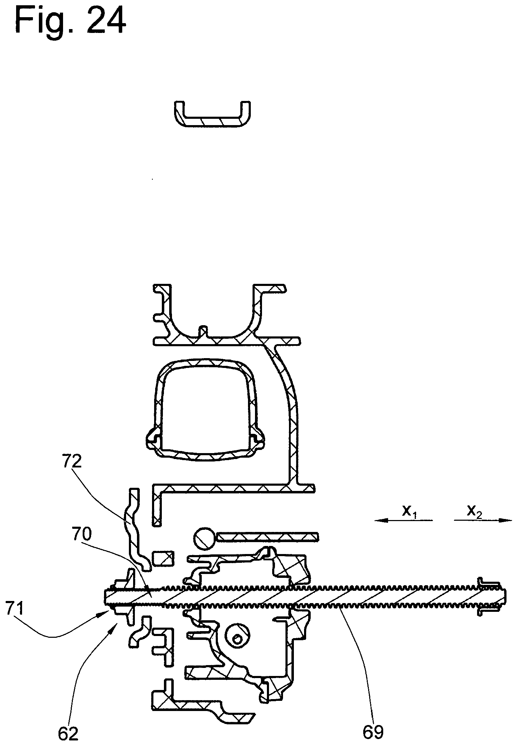

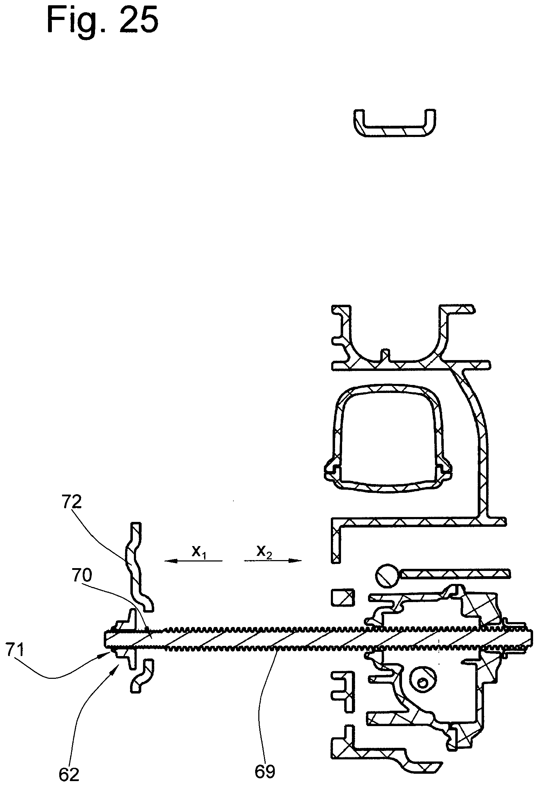

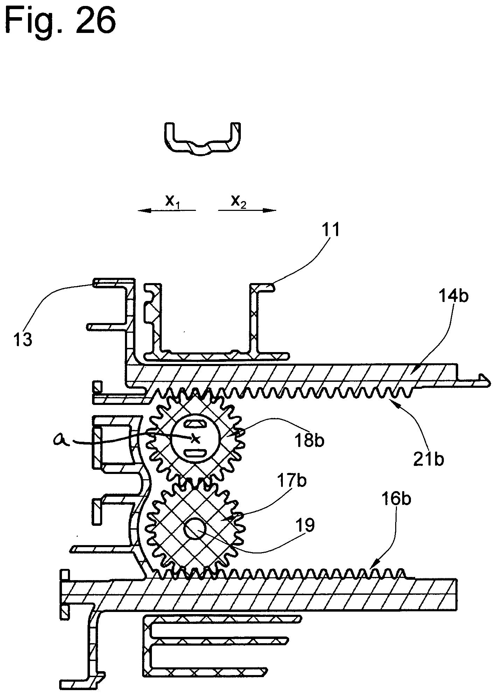

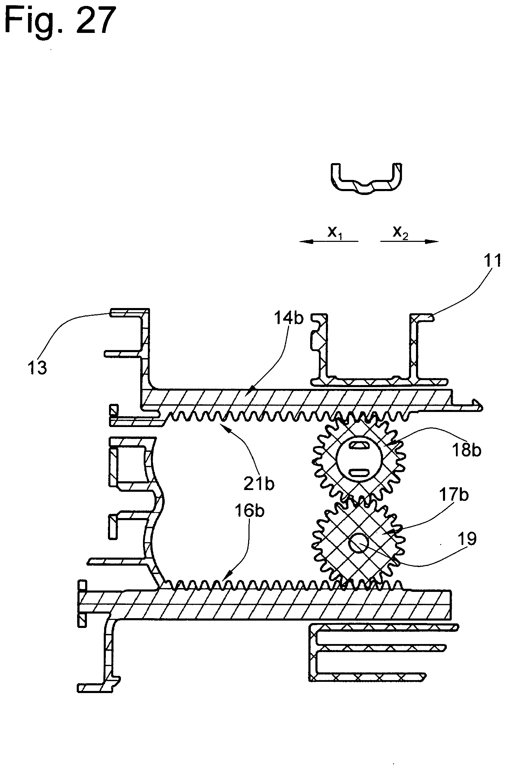

Ein viertes Ausführungsbeispiel ist in den Fig. 18 bis 27 dargestellt. Eine Kopfstütze gemäß dem vierten Ausführungsbeispiel ist in den Fig. mit dem Bezugszeichen 60 bezeichnet. Die Kopfstütze 60 gemäß dem vierten Ausführungsbeispiel ist prinzipiell wie die Kopfstütze 30 gemäß dem dritten Ausführungsbeispiel ausgebildet.

Die Kopfstütze 60 unterscheidet sich von der Kopfstütze 30 lediglich dadurch, dass eine erste elektrische Antriebsvorrichtung 61 für eine Verstellung des Kopfkastens 11 in Richtung z1 und z2 sowie eine zweite elektrische Antriebsvorrichtung 62 für eine Verstellung des Kopfanlageteils 13 in Richtung x1 und x2 vorgesehen ist. Aufgrund der Selbsthemmung der Antriebsvorrichtungen 61 und 62 ist bei der Kopfstütze 60 keine gesonderte Verriegelungsvorrichtung 33 und keine Arretiervorrichtung 44 entsprechend der Kopfstütze 30 vorgesehen.

Die Antriebsvorrichtung 61 umfasst einen ersten Motor 63, der ein Elektromotor ist, welcher an dem Kopfkasten 11 befestigt ist. Der Motor 63 kann eine mit einer ersten Spindel 64 in Eingriff stehende, nicht dargestellte Spindelmutter in die Drehrichtungen m1 und m2 antreiben. Die Spindelmutter ist drehbar an dem Kopfkasten 11 gehalten. Die Spindel 64 ist mit einem Endbereich 65 mit der Spindelmutter in Eingriff. Mit einem Endbereich 66 ist die Spindel 64 mit einer Befestigung 67 fest, unbeweglich mit der Traverse 32 verbunden.

Wenn die Spindelmutter von dem Motor 63 in Richtung m1 gedreht wird, schraubt sie sich auf der Spindel 64 in Richtung z1 und der Kopfkasten 11 bewegt sich in z1 entlang der Tragstangenenden 12a und 12b. Wird die Spindelmutter hingegen von dem Motor 63 in Richtung m2 bewegt, schraubt sie sich auf der Spindel 64 in Richtung z2 und der Kopfkasten 11 bewegt sich in Richtung z2 relativ zu den Tragstangenenden 12a und 12b.

An dem Fahrzeugsitz, an welchem die Kopfstütze 60 gehalten ist oder und an einem anderen Ort im Fahrzeuginnenraum kann eine der Antriebsvorrichtung 61 zugeordnete Betätigung angeordnet sein, mittels welcher der Motor 63 gesteuert werden kann, d.h., mit welcher der Motor an- und ausgeschaltet und die Drehrichtung festgelegt wird.

Die zweite Antriebsvorrichtung 62 zum Antrieb des Kopfanlageteils 13 umfasst einen zweiten Motor 68, der ein Elektromotor ist, und der eine nicht dargestellte Spindelmutter in die Drehrichtungen n1 und n2 antreibt. Die Spindelmutter steht mit einer zweiten Spindel 69 in Eingriff. Ein Endbereich 70 der zweiten Spindel 69 ist mittels einer Befestigung 71 an einer Platte 72 des Kopfanlageteils 13 fest, unbeweglich verbunden. Ein Endbereich 73 der zweiten Spindel 69 steht mit der zweiten Spindelmutter in Eingriff.

Wird die Spindelmutter von dem zweiten Motor 68 in Richtung n1 gedreht, so bewegen sich die Spindel 69 und das daran befestigte Kopfanlageteil 13 in Richtung x1. Bei umgekehrter Drehrichtung n2 der Spindelmutter, bewegen sich die Spindel 69 und das Kopfanlageteil 13 in Richtung x2.

An dem Fahrzeugsitz, an dem die Kopfstütze 60 gehalten ist oder und an einem anderen Ort im Fahrzeuginnenraum kann eine der Antriebsvorrichtung 62 zugeordnete Betätigung angeordnet sein, mittels welcher der Motor 68 gesteuert werden kann, d.h., mit welcher der Motor an- und ausgeschaltet und die Drehrichtung festgelegt wird.

## Patentansprüche

1. Kopfstütze mit einem Kopfkasten(11), welcher an wenigstens einer Tragstange (12a, 12b) gehalten ist und mittels der Tragstange (12a, 12b) an der Rückenlehne eines Fahrzeugsitzes lagerbar ist, mit einem Kopfanlageteil (13), welches mittels einer primären Führungsvorrichtung relativ zu dem Kopfkasten (11) in horizontaler Richtung (x1, x2) zwischen einer von dem Kopf eines Sitzinsassen wegbewegten hinteren Position und einer dem Kopf angenäherten vorderen Position verstellbar ist, dass der Kopfkasten (11) erste Führungsmittel aufweist, die mit zweiten Führungsmitteln des Kopfanlageteils (13) zusammenwirken, wobei die einen Führungsmittel zwei horizontal voneinander beabstandete sich in Bewegungsrichtung des Kopfanlageteils erstreckende Zahnschienen (16a, 16b) umfassen, die ein erstes Zahnschienenpaar bilden und zwei horizontal voneinander beabstandete sich in Bewegungsrichtung des Kopfanlageteils erstreckende Zahnschienen (21a, 21b) umfassen, die ein zweites Zahnschienenpaar bilden, welches sich parallel zu dem ersten Zahnschienenpaar erstreckt und diesem zugewandt ist, wobei die anderen Führungsmittel zwei horizontal voneinander beabstandete Zahnräder (17a, 17b) umfassen, die ein erstes Zahnradpaar bilden, wobei jedes Zahnrad (17a, 17b) des ersten Zahnradpaares mit einer Zahnschiene (16a, 16b) des ersten Zahnschienenpaares in Eingriff steht und dass mit jeder Zahnschiene (21a, 21b) des zweiten Zahnschienenpaares ein Zahnrad (18a, 18b) eines zweiten Zahnradpaares in Eingriff steht, welches zwei horizontal voneinander beabstandete Zahnräder umfasst, wobei die Zahnräder (17a, 17b) des ersten Zahnradpaares und / ' oder die Zahnräder (18a, 18b) des zweiten Zahnradpaares mit einer Welle (19) bewegungsverbunden sind und wobei jedes Zahnrad bei der Bewegung des Kopfanlageteils (13) zwischen der hinteren Position und der vorderen Position auf der Zahnschiene (16a, 16b) abrollt, **dadurch gekennzeichnet, dass** jeweils ein Zahnrad (17a, 17b) des ersten Zahnradpaares mit einem Zahnrad (18a, 18b) des zweiten Zahnradpaares in Eingriff steht.

2. Kopfstütze nach Anspruch 1, **dadurch gekennzeichnet, dass** eine Arretiervorrichtung (44) dem Kopfkasten (11) zugeordnete erste Arretiermittel und dem Kopfanlageteil (13) zugeordnete zweite Arretiermittel umfasst.

3. Kopfstütze nach Anspruch 2, **dadurch gekennzeichnet, dass** die Arretiervorrichtung zwischen einer Arretierposition, in welcher die ersten Arretiermittel und die zweiten Arretiermittel in Eingriff stehen und einer Löseposition, in welcher die ersten Arretiermittel und die zweiten Arretiermittel außer Eingriff stehen, bewegbar ist.

4. Kopfstütze nach einem der vorangegangenen Ansprüche, **dadurch gekennzeichnet, dass** der Kopfkasten (11) mittels einer sekundären Führungsvorrichtung bewegbar an einer Tragstange (12a, 12b) gelagert ist und mittels einer Verriegelungsvorrichtung (33) in wenigstens einer Position verriegelbar ist.

5. Kopfstütze nach Anspruch 4, **dadurch gekennzeichnet, dass** die Verriegelungsvorrichtung (33) einen Riegel (34a, 34b) umfasst, welcher dem Kopfkasten (11) zugeordnet ist, wobei der Riegel zwischen einer Riegelposition und einer Freigabeposition bewegbar ist.

6. Kopfstütze nach Anspruch 5, **dadurch gekennzeichnet, dass** ein Verstellteil (38) den Riegel (34a, 34b) zwischen der Riegelposition und der Freigabeposition bewegt.

7. Kopfstütze nach Anspruch 6, soweit auf einen der Ansprüche 2 oder 3 zurückbezogen, **dadurch gekennzeichnet, dass** die ersten Arretiermittel dem Verstellteil (38) zugeordnet sind.

8. Kopfstütze nach einem der Ansprüche 6 oder 7, **dadurch gekennzeichnet, dass** das Verstellteil (38) an dem Kopfkasten (11) bewegbar gelagert ist.

9. Kopfstütze nach einem der vorangegangenen Ansprüche, **dadurch gekennzeichnet, dass** das Kopfanlageteil (13) von einer Feder (41) in eine erste Richtung (x1) oder in eine zweite Richtung (x2) belastet ist.

10. Kopfstütze nach einem der vorangegangenen Ansprüche, **dadurch gekennzeichnet, dass** wenigstens eine elektrische Antriebsvorrichtung (63, 64, 68, 69) vorgesehen ist, mittels welcher das Kopfanlageteil (13) relativ zu dem Kopfkasten (11) und / oder der Kopfkasten (11) relativ zu der Tragstange (12a, 12b) bewegbar ist und dass die Antriebsvorrichtung das Kopfanlageteil und / oder den Kopfkasten in der jeweiligen Relativposition hält.

## Claims

1. Head support having a head box (11) which is held on at least one support rod (12a, 12b) and can be mounted on the backrest of a vehicle seat by means of the support rod (12a, 12b), having a head bearing part (13) which can be adjusted, by means of a primary guide device, relative to the head box (11) in a horizontal direction (x1, x2) between a back position, which is moved away from the head of an occupant, and a front position which is close to the head, the head box (11) has a first guiding means which cooperates with second guiding means of the head bearing part (13), wherein the one guiding means comprises two toothed rails (16a, 16b) that are spaced apart from each other horizontally and extend in the movement direction of the head bearing part, said rails forming a first toothed rail pair and comprising two toothed rails (21a, 21b) that are spaced apart from each other horizontally, extending in the movement direction of the head bearing part, which form a second toothed rail pair thatextends parallel to the first toothed rail pair and is facing towards this, wherein the other guiding means comprises two toothed gears (17a, 17b) spaced apart from each other horizontally, which form a first toothed gear pair, wherein each toothed gear (17a, 17b) of the first toothed gear pair is engaged with a toothed rail (16a, 16b) of the first toothed rail pair, and a toothed gear (18a, 18b) of a second toothed gear pair is engaged with each toothed rail (21a, 21b) of the second toothed rail pair, which comprises two toothed gears spaced apart from each other horizontally, wherein the toothed gears (17a, 17b) of the first toothed gear pair and/or the toothed gears (18a, 18b) of the second toothed gear pair are movement connected to a shaft (19) and wherein each toothed gear rolls between the rear position and the front position on the toothed rail (16a, 16b) when the head bearing part (13) is moving, **characterised in that** in each case a toothed gear (17a, 17b) of the first toothed gear pair is engaged with a toothed gear (18a, 18b) of the second toothed gear pair.

2. Head support according to claim 1, **characterised in that** a blocking device (44) comprises first blocking means assigned to the head box (11) and second blocking means assigned to the head bearing part (13).

3. Head support according to claim 2, **characterised in that** the blocking device can be moved between a blocking position, in which the first blocking means and the second blocking means are engaged, and a release position in which the first blocking means and the second blocking means are disengaged.

4. Head support according to one of the preceding claims, **characterised in that** the head box (11) is mounted on a support rod (12a, 12b) that can be moved by means of a secondary guide device, and can be locked in at least one position by means of a locking device (33).

5. Head support according to claim 4, **characterised in that** the locking device (33) comprises a lock (34a, 34b) which is assigned to the headbox (11), wherein the lock can be moved between a locking position and a released position.

6. Head support according to claim 5, **characterised in that** an adjusting part (38) moves the lock (34a, 34b) between the locking position and the released position.

7. Head support according to claim 6, insofar as when dependent on one of claims 2 or 3, **characterised in that** the first blocking means are assigned to the adjusting part (38).

8. Head support according to one of claims 6 or 7, **characterised in that** the adjusting part (38) is moveably mounted on the head box (11).

9. Head support according to one of the preceding clams, **characterised in that** the head bearing part (13) is loaded by a spring (41) in a first direction (x1) or in a second direction (x2).

10. Head support according to one of the preceding claims, **characterised in that** at least one electric drive device (63, 64, 68, 69) is provided, by means of which the head bearing part (13) can be moved relative to the head box (11) and/or the head box (11) can be moved relative to the support rod (12a, 12b), and the drive device holds the head bearing part and/or the head box in the respective relative position.

## Revendications

1. Appuie-tête avec un caisson de tête (11) qui est maintenu sur au moins une tige de support (12a, 12b) et peut être monté sur le dossier d'un siège de véhicule au moyen de la tige de support (12a, 12b), avec un élément d'appui de tête (13) qui peut être réglé au moyen d'un dispositif de guidage primaire dans une direction horizontale (x1, x2) par rapport au caisson de tête (11), entre une position arrière éloignée de la tête d'un occupant du siège et une position avant proche de la tête, le caisson de tête (11) comportant des premiers moyens de guidage qui coopèrent avec des deuxièmes moyens de guidage de l'élément d'appui de tête (13), des moyens de guidage comprenant deux barres dentées (16a, 16b) espacées horizontalement entre elles et s'étendant dans la direction de déplacement de l'élément d'appui de tête qui constituent une première paire de barres dentées et comprenant deux barres dentées (21a, 21b) espacées horizontalement entre elles et s'étendant dans la direction de déplacement de l'élément d'appui de tête qui constituent une deuxième paire de barres dentées, les autres moyens de guidage comprenant deux roues dentées (17a, 17b) espacées horizontalement entre elles qui constituent une première paire de roues dentées, chaque roue dentée (17a, 17b) de la première paire de roues dentées étant en prise avec une barre dentées (16a, 16b) de la première paire de barres dentées, et une roue dentée (18a, 18b) d'une deuxième paire de roues dentées qui comprend deux roues dentées espacées horizontalement étant en prise avec chaque barre dentée (21a, 21b) de la deuxième paire de barres dentées, les roues dentées (17a, 17b) de la première paire de roues dentées et/ou les roues dentées (18a, 18b) de la deuxième paire de roues dentées étant solidaires en mouvement avec un arbre (19) et chaque roue dentée roulant sur le rail denté (16a, 16b) lors du déplacement de l'élément d'appui de tête (13) entre la position arrière et la position avant, **caractérisé en ce que** chacune des roues dentées (17a, 17b) de la première paire de roues dentées est en prise avec une roue dentée (18a, 18b) de la deuxième paire de roues dentées.

2. Appuie-tête selon la revendication 1, **caractérisé en ce qu'**un dispositif de verrouillage (44) comprend des premiers moyens de verrouillage associés au caisson de tête (11) et des deuxièmes moyens de verrouillage associés à l'élément d'appui de tête (13).

3. Appuie-tête selon la revendication 2, **caractérisé en ce que** le dispositif de verrouillage peut être déplacé entre une position de verrouillage dans laquelle les premiers moyens de verrouillage et les deuxièmes moyens de verrouillage sont en prise et une position de libération dans laquelle les premiers moyens de verrouillage et les deuxièmes moyens de verrouillage sont hors prise.

4. Appuie-tête selon une des revendications précédentes, **caractérisé en ce que** le caisson de tête (11) est monté de manière mobile sur une tige de support (12a, 12b) au moyen d'un dispositif de guidage secondaire et peut être verrouillé dans au moins une position au moyen d'un dispositif de verrouillage (33).

5. Appuie-tête selon la revendication 4, **caractérisé en ce que** le dispositif de verrouillage (33) comprend un verrou (34a, 34b) qui est associé au caisson de tête (11), ce verrou pouvant être déplacé entre une position de verrouillage et une position de libération.

6. Appuie-tête selon la revendication 5, **caractérisé en ce qu'**un élément de réglage (38) déplace le verrou (34a, 34b) entre la position de verrouillage et la position de libération.

7. Appuie-tête selon la revendication 6 en lien avec une des revendications 2 ou 3, **caractérisé en ce que** les premiers moyens de verrouillage sont associés à l'élément de réglage (38).

8. Appuie-tête selon une des revendications 6 ou 7, **caractérisé en ce que** l'élément de réglage (38) est monté de manière mobile sur le caisson de tête (11).

9. Appuie-tête selon une des revendications précédentes, **caractérisé en ce que** l'élément d'appui de tête (13) est sollicité par un ressort (41) dans une première direction (x1) ou dans une deuxième direction (x2).

10. Appuie-tête selon une des revendications précédentes, **caractérisé en ce qu'**il est prévu au moins un dispositif d'entraînement électrique (63, 64, 68, 69) au moyen duquel l'élément d'appui de tête (13) peut être déplacé par rapport au caisson de tête (11) et/ou le caisson de tête (11) par rapport à la tige de support (12a, 12b) et que ce dispositif d'entraînement maintient l'élément d'appui de tête et/ou le caisson de tête dans la position relative correspondante.
